(19) Europäisches Patentamt
European Patent Office
Office européen des brevets

(11) **EP 4 253 234 B1**

(12) **EUROPEAN PATENT SPECIFICATION**

(45) Date of publication and mention
of the grant of the patent:
**29.04.2026 Bulletin 2026/18**

(51) International Patent Classification (IPC):
**B64D 11/04** (2006.01)    **B64D 11/00** (2006.01)
**B64D 11/02** (2006.01)    **F16F 9/00** (2006.01)
**F16F 9/346** (2006.01)    **F16F 9/58** (2006.01)

(21) Application number: **23163251.4**

(22) Date of filing: **21.03.2023**

(52) Cooperative Patent Classification (CPC):
**B64D 11/02; B64D 11/003; B64D 11/04;
F16F 9/0218; F16F 9/435**

(54) **LOAD ABSORBING TIE ROD FOR AIRCRAFT STRUCTURE INTEGRATION**

LASTAUFNEHMENDE ZUGSTANGE ZUR INTEGRATION EINER FLUGZEUGSTRUKTUR

TIRANT D'ANCRAGE ABSORBANT LA CHARGE POUR INTÉGRATION DE STRUCTURE
D'AÉRONEF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.03.2022 IN 202241017961
27.06.2022 US 202217850692**

(43) Date of publication of application:
**04.10.2023 Bulletin 2023/40**

(73) Proprietor: **B/E Aerospace, Inc.
Winston-Salem, NC 27105 (US)**

(72) Inventor: **PALLE, JOHN WYCLIFFE
Hyderabad (IN)**

(74) Representative: **Dehns
10 Old Bailey
London EC4M 7NG (GB)**

(56) References cited:
**EP-B1- 3 020 636        US-A- 5 862 895
US-A1- 2018 283 485    US-B2- 10 371 313**

## Description

### CROSS-REFERENCE TO RELATED APPLICATIONS

This application claims priority to, and the benefit of, India Patent Application No. 202241017961, filed March 28, 2022, (DAS code 1E0B) and titled "LOAD ABSORBING TIE ROD FOR AIRCRAFT STRUCTURE INTEGRATION."

### FIELD

The present disclosure relates to tie rods for aircraft, and, more specifically, to load absorbing tie rods for securing interior cabin monuments.

### BACKGROUND

Tie rods are used to secure cabin interior monuments, such as galley structures, lavatory structures, overhead bins, etc., to the aircraft frame. For example, cabinetry within the cabin galley may be affixed to the floor within the cabin and also affixed to the structure of the aircraft with tie rods. A severe loading event such as a 9g forward inertia event, which may occur during a rejected take off or a crash landing, or a rapid decompression (RD) event, wherein the decompression of the cabin occurs in a matter of seconds, can apply a load of up to 25.0 kilonewtons (kN) to the tie rod. Such loading could potentially result in failure of the tie rod and/or over stressing the joints, brackets, and/or panels of the monument. EP 3 020 636 B1 describes a self-dampening tie rod assembly which includes a first rod member and an enclosure which defines an opening and contains a fluid with the first rod member affixed to the enclosure. A second rod member extends through the opening with a seal member positioned between the second rod member and the enclosure. The assembly also includes a head member affixed to the second rod member wherein the head member is positioned within the enclosure and the head member and the second rod member are moveable relative to the enclosure.

US 5 862 895 A describes an oleopneumatic shock absorbing device including a hydraulic fluid-filled cylinder combined with a movable assembly moved by outside forces for circulating the hydraulic fluid. The movable assembly consists of a hollow mobile piston on the end of a push rod with an internal longitudinal space forming a reservoir for the hydraulic fluid. When the piston and the push rod are moved, the fluid flows through a variable flow-rate transfer channel providing variable, e.g. gradual shock absorption throughout both the outward stroke and the return stroke.

US 10 371 313 B2 describes a load relief tie rod. US 2018/283485 A2 describes a fluid damper.

## SUMMARY

A load absorbing tie rod according to claim 1 is disclosed herein.

In various embodiments, the first load threshold may be greater than or equal to 5.0 kilonewtons.

In various embodiments, a pressure within the volume may be between about 9.9 megapascals and about 19.7 megapascals. In various embodiments, a pressure release valve may be fluidly connected to the volume. The pressure release valve is configured to open in response to a second load threshold. The second load threshold may be greater than or equal to 25.0 kilonewtons

An assembly according to claim 5 is also disclosed herein.

In various embodiments, a monument connector may be coupled to the piston and a bracket of the interior cabin monument, and an aircraft connector may be coupled to the outer cylinder and the aircraft structure. In various embodiments, the monument connector may be coupled to the piston via a threaded engagement. In various embodiments, the monument connector may be integrally formed with to the piston.

In various embodiments, the load absorbing tie rod may include a pressure release valve fluidly coupled to the volume.

A method according to claim 9 is also disclosed herein.

In various embodiments, the method may further comprise injecting the compressed gas through a valve fluidly coupled to the outer cylinder. The valve may be configured to open in response to the load applied to the piston being greater than a second load threshold. In various embodiments, the first load threshold may be between about 4.0 kilonewtons and about 7.0 kilonewtons, and the second load threshold may be greater than or equal to 25.0 kilonewtons.

In various embodiments, the method may further comprise coupling a monument connector to the piston and the interior cabin monument and coupling an aircraft connector to the outer cylinder the aircraft structure. The interior cabin monument may comprise at least one of a galley structure, a lavatory structure, or an overhead bin

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following figures, wherein like reference numbers denote like elements.

FIG. 1 illustrates an aircraft, in accordance with various embodiments;
FIG. 2 illustrates a load absorbing tie rod coupled to an aircraft cabin monument and an aircraft structure, in accordance with various embodiments;
FIG. 3A and 3B illustrate a perspective view and a cross-sectional view, respectively, of a load absorbing tie rod, in accordance with various embodiments;
FIG. 4 illustrates a method of assembling a load absorbing tie rod for supporting an interior cabin monument, in accordance with various embodiments.

## DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, coupled, or the like may include permanent, removable, temporary, partial, full and/or any other possible attachment option. Additionally, any reference to without contact (or similar phrases) may also include reduced contact or minimal contact.

Surface shading lines and/or cross-hatching may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity. An X-Y-Z axis has been provided in various figures for ease of illustration. In the provided X-Y-Z axis, the X-axis is oriented in a forward to aft direction, the Z-axis is oriented in a vertical direction, perpendicular to the plane formed by the X-axis and the Y-axis and to the floor of an aircraft, and the Y-axis is oriented in a horizontal direction, perpendicular to the plane formed by the X-axis and the Z-axis and parallel the floor of an aircraft.

As used herein, "aft" refers to the direction associated with a tail (e.g., the back end) of an aircraft, or generally, to the direction of exhaust of a gas turbine engine. As used herein, "forward" refers to the direction associated with a nose (e.g., the front end) of the aircraft, or generally, to the direction of flight or motion.

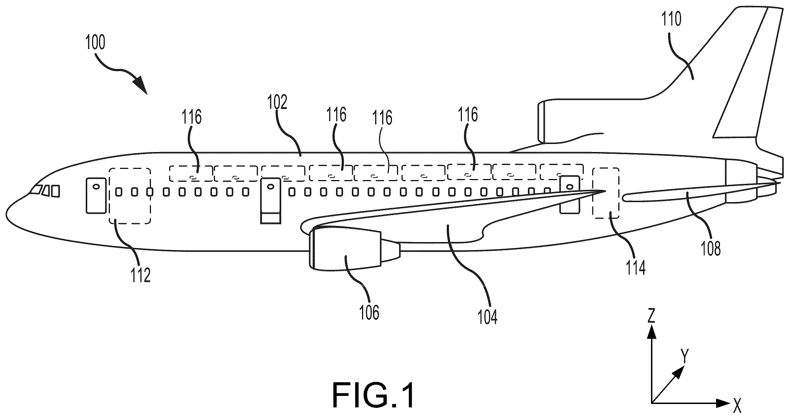

With reference now to FIG. 1, an aircraft 100 is illustrated, in accordance with various embodiments. Aircraft 100 includes a fuselage 102 having wings 104 attached thereto. Aircraft 100 includes engines 106, which may be attached to wings 104. Horizontal stabilizers 108 and a vertical stabilizer 110 are attached to proximate the tail (or aft end) of fuselage 102. Fuselage 102 defines an aircraft cabin therein. Passengers may board aircraft 100 and sit within the aircraft cabin during travel. The aircraft cabin includes at least one galley 112 and at least one lavatory 114. In various embodiments, a plurality of overhead bins 116 may be installed throughout the aircraft cabin. Aircraft 100 is an example of an aircraft in which one or more load absorbing tie rods, as described in further detail below, may be employed to secure interior cabin monument(s) of aircraft 100 (e.g., overhead bins 116 and/or structures in lavatory 114 and/or in galley 112) to an aircraft frame structure.

Various aviation regulations define the loads aircraft structures must be designed to withstand. For example, federal aviation regulation 25.561 prescribes that items of mass in an aircraft shall be restrained under all loads up a 3.0g upward load, a 9.0g forward load, a 3.0g sideward load, a 6.0g downward load and a 1.5g rearward load, and that seats and items of mass (and their supporting structure) must not deform under any loads up to the above specified load in any manner that would impede subsequent rapid evacuation of occupants. Federal aviation regulation 25.365 prescribes that any structure, component, or part, inside or outside a pressurized aircraft compartment, the failure of which could interfere with continued safe flight and landing, must be designed to withstand the effects of a sudden release of pressure through an opening in any compartment at any operating altitude.

Disclosed herein is a load absorbing tie rod that includes a pressurized gas cylinder configured to compress in response to a severe loading event (e.g., a 9g forward inertia event, a rapid decompression event, a 3.0g upward, 3.0g sideward, a 6.0g downward, 1.5g rearward, etc.). As used herein, the unit "g" refers to g-force and is approximately equal to the acceleration due to gravity at the Earth's surface (e.g., 1.0g equals 32.17 ft/s$^2$ or 9.81 m/s$^2$). In accordance with various embodiments, the load absorbing tie rod includes a piston and a cylinder housing a compressed gas. During a severe loading event, the load applied to piston by the monument causes the piston to translate toward the compressed gas, thereby causing the compressed gas to further compress and store the energy. In this regard, the tie rod absorbs the load while allowing the monument to displace, thereby tending to reduce the stress concentrations at the joints, brackets, and/or panels of the monument. In accordance with various embodiments, the compressed gas is pressurized such that normal inflight loads do not translate the piston (e.g., do not further compress the compressed gas). In accordance with various embodiments, load absorbing tie rods, as disclosed herein, tend to reduce the load transfer generated by a monument and thereby absorb and/or dampen the load. In this regard, the load absorbing tie rods decrease the amount of load transferred to the aircraft structure and stress concentrations in monument, which increases overall safety during a severe loading event. The load absorbing tie rods may reduce the structural strength requirements of the aircraft structures due to the reduced loads, which may allow for lighter weight materials, which may also decrease costs.

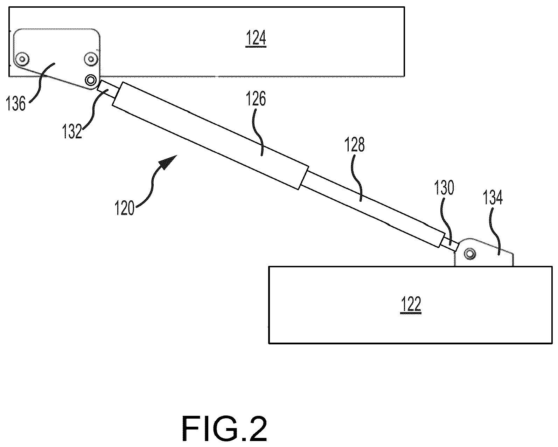

With reference to FIG. 2, a load absorbing tie rod 120 connected between a monument 122 and an aircraft structure (e.g., an aircraft frame) 124 is illustrated. Monument 122 may be any interior cabin monument located in the aircraft cabin. For example, monument 122 may be a galley component, a lavatory component, an overhead bin, or any other monument that may benefit from, or is associated with, connection to an aircraft structure.

Load absorbing tie rod 120 includes an outer cylinder 126 and a piston 128. As described in further detail below, piston 128 is located, at least, partially in outer cylinder 126. Load absorbing tie rod 120 is configured to allow piston 128 to translate relative to outer cylinder 126 (e.g., telescope relative to outer cylinder 126) in response to a severe loading event, while reducing, or preventing, translation of piston 128 relative outer cylinder 126 when normal inflight loads (e.g., loads less than or equal to 5.0 kN are applied to load absorbing tie rod 120. In various embodiments, load absorbing tie rod 120 is configured to prevent translation of piston 128 relative outer cylinder 126 when a load of less than or equal to 5.0 kN is applied to load absorbing tie rod 120. However, tie rod 120 may be designed to prevent translation of piston 128 at any desired load.

In accordance with various embodiments, load absorbing tie rod 120 includes a monument connector 130 and an aircraft connector 132. Monument connector 130 is connected to piston 128. Aircraft connector 132 is connected to outer cylinder 126. Monument connector 130 couples piston 128 to monument 122. For example, in various embodiments, monument connector 130 may be connected to a bracket 134 of monument 122. Aircraft connector 132 couples outer cylinder 126 to aircraft structure 124. For example, in various embodiments, aircraft connector 132 may be connected to a bracket 136 of aircraft structure 124.

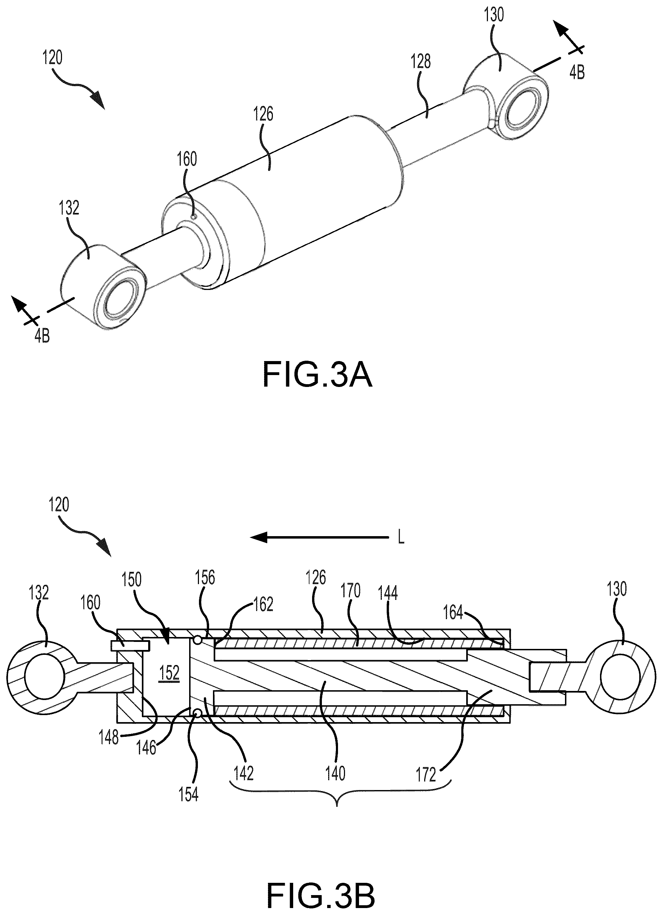

With reference to FIGs. 3A and 3B, additional details of load absorbing tie rod 120 are illustrated. Piston 128 includes a piston head 140 and a piston rod 142 extending from piston head 140. In various embodiment, a diameter of piston rod 142 is less than a diameter of piston head 140. In various embodiments, the diameter of piston head 140 is approximately equal to the inner diameter of outer cylinder 126. Inner diameter is measured at an internal (or inner circumferential) surface 144 of outer cylinder 126. A first surface 146 of piston head 140, internal surface 144 of outer cylinder 126 and a first end surface 148 of outer cylinder 126 define a volume 150. A compressed gas 152 is contained in volume 150. Compressed gas 152 may be nitrogen, helium, oxygen, argon, or any other suitably compressible gas. In various embodiments, a seal 154 may be located between internal surface 144 of outer cylinder and an outer circumferential surface 156 of piston head 140. Seal 154 forms a hermetic seal with internal surface 144 and outer circumferential surface 156 of piston head 140, thereby preventing compressed gas 152 from leaking past piston head 140.

In various embodiments, a valve 160 may be fluidly connected to volume 150. Valve 160 may be a pressure release valve configured to open in response to the pressure within volume 150 exceeding a valve pressure threshold. Valve 160 may also be employed to inject compressed gas 152 into volume 150. In this regard, compressed gas 152 may be injected into volume 150 via valve 160. First surface 146 of piston head 140 is oriented toward first end surface 148 of outer cylinder 126. A second surface 162 of piston head 140 is oriented away from (e.g., is opposite) first surface 146. Second surface is oriented toward a second end surface 164 of outer cylinder 126. Internal surface 144 of outer cylinder 126 may extend from first end surface 148 to second end surface 164. A stopper 170 is located within outer cylinder 126 and between piston head 140 and second end surface 164. Stopper 170 is configured to prevent, or otherwise block, translation of piston head 140 toward second end surface 164. In this regard, stopper 170 counters the pressure applied by compressed gas 152 against first surface 146. In examples not falling within the scope of the claims, the stopper is a discrete component located in outer cylinder 126. In accordance with the claimed invention, stopper 170 is integral with outer cylinder 126. The internal surface 144 has a first diameter in a first portion of cylinder and a second, smaller diameter in a second portion of cylinder. The second diameter being configured to generate an interference with piston head 140 and thereby preventing or reducing translation of piston head 140 toward second end surface 164.

In various embodiments, piston 128 includes a mounting section 172. Piston rod 142 may extend between piston head 140 and mounting section 172. A diameter of mounting section 172 may be greater than a diameter of piston rod 142. Monument connector 130 may be attached to mounting section 172. In various embodiments, monument connector 130 may be coupled to mounting section 172 via threaded engagement between monument connector 130 and mounting section 172. In various embodiments, monument connector 130 may be integral to mounting section 172. In this regard, piston 128 and monument connector 130 may be a single, monolithic component.

Aircraft connector 132 may be attached to outer cylinder 126 proximate first end surface 148. In various embodiments, aircraft connector 132 may be coupled to outer cylinder via threaded engagement between aircraft connector 132 and outer cylinder 126. In various embodiments, aircraft connector 132 may be integral with outer cylinder 126. In this regard, outer cylinder 126 and aircraft connector 132 may be a single, monolithic component.

The pressure applied by compressed gas 152 against piston head 140 is configured to prevent translation of piston 128 in response to a load L that is less than a threshold load. For example, compressed gas 152 is configured to prevent translation of piston 128 in response to normal inflight loads. In various embodiments, the threshold load may be 5.0 kN. In response to a load L that exceeds the threshold load (e.g., exceeding the pressure applied by compressed gas 152) piston 128 will translate toward first end surface 148, thereby further compressing compressed gas 152. In this regard, a portion of load L is absorbed and/or dampened, thereby reducing the load transfer generated by translation of the monument attached to monument connector 130.

Valve 160 is configured to open and release pressure from volume 150 in response to the pressure within volume 150 exceeding the valve pressure threshold. Stated differently, piston 128 translates toward first end surface 148 in response to a load L greater than a first (or minimum) load threshold and valve 160 opens in response to load L being greater than a second (or maximum) load threshold. For example, tie rod 120 may be configured to have a minimum load threshold of 5.0 kN and a maximum load threshold of 25.0 kN. In this regard, piston 128 translates toward first end surface 148 in response to a load L greater than 5 kN and valve 160 opens in response to a load L greater 25 kN. It is contemplated and understood that the above first/minimum load threshold and second/maximum load threshold of 5.0 kN and 25.0 kN, respectively, are exemplary, and tie rod 120 may be configured to have any desired first/minimum load threshold and second/maximum load threshold. The pressure within volume 150 may be selected based on the desired first/minimum load threshold and second/maximum load threshold, using the formula:

$$\text{Pressure} = \text{Force/Area}$$

where Force is the desired load threshold and Area is the area of a cross-section of volume 150. For example, a pressure in volume 150 for a tie rod 120 with an outer cylinder 126 having a 1.0 inch (25.4 millimeters (mm)) inner diameter (the inner diameter being measured at internal surface 144) and a minimum load threshold of 5.0 kN may be approximately 9.9 megapascals (MPa) (1435.9 pounds per square inch (psi)). The pressure in volume 150 at which valve 160 may open for a tie rod 120 having a 1.0 inch (25.4 mm) inner diameter outer cylinder 126 and a maximum load threshold of 25.0 kN may be approximately 49.3 MPa (7150 psi).

In accordance with various embodiments, the compressed gas within volume 150 is selected based on its compressibility factor, and volume 150 and outer cylinder 126 are designed based on the compressibility factor of the selected gas and the desired minimum load threshold and maximum load threshold. For example, the wall thickness of outer cylinder 126 is designed to accommodate the pressure rage associated with the desired minimum and maximum load thresholds.

In various embodiments, in a neutral state (i.e., prior to a load being applied to piston 128), a pressure within volume 150 may be between about 7.9 MPa and about 49.3 MPa (between 1145.8 psi and 7150.4 psi), between about 8.9 MPa and about 39.5 MPa (between 1290.8 psi and 5729.0 psi), between about 9.9 MPa and about 39.5 (between 1435.9 psi and 5729.0 psi), between about 9.9 MPa and about 29.6 MPa (between 1435.9 psi and 4293.1 psi), between about 9.9 MPa and about 19.7 MPa (between 1435.9 psi and 2857.2 psi), between about 9.9 MPa and about 13.8 MPa (between 1435.9 psi and 2001.5 psi), and/or about 9.9 MPa (1435.9 psi). In the previous context only, the term "about" means $\pm 0.5$ MPa ($\pm$ 72.5 psi).

In various embodiments, the minimum load threshold of tie rod 120 (i.e., the minimum load at which piston translates toward first end surface 148) may at least 4.0 kN, at least 5.0 kN, at 10 kN, or any other desired minimum load. In various embodiments, the minimum load threshold of tie rod 120 may be between about 4.0 kN and about 25.0 kN, between about 4.5 kN and about 20.0 kN, between about 5.0 kN and about 20.0 kN, between about 5.0 kN and about 15.0 kN, between about 5.0 kN and about 10.0 kN, between about 4.0 and about 7.0 kN, and/or about 5.0 kN. In the previous context only, the term "about" means $\pm 0.5$ kN.

In various embodiments, the maximum load threshold of tie rod 120 (i.e., the load at which pressure valve 160 opens) may be at least 20.0 kN, at least 25.0 kN, or any other desired load threshold. For example, in various embodiments, the maximum load threshold of tie rod 120 may be between about 20.0 kN and about 40.0 kN, between about 22.0 kN and about 30.0 kN, between about 25.0 kN and about 30.0 kN, and/or between about 25.0 kN and about 28.0 kN. In the previous context only, the term "about" means $\pm 0.5$ kN.

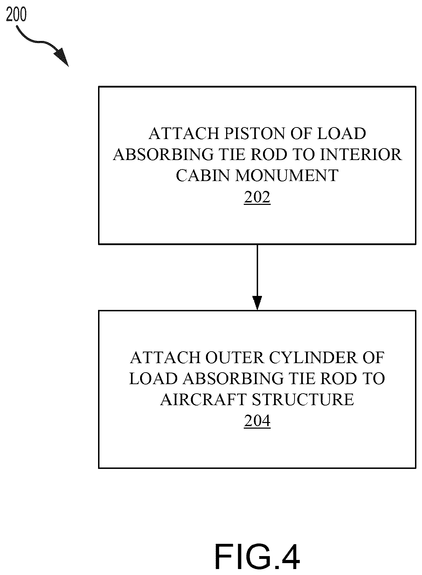

With reference to FIG. 4, a method 200 of assembling a load absorbing tie rod for supporting an interior cabin monument is illustrated. Method 200 includes attaching a piston of a load absorbing tie rod to an interior cabin monument (step 202) and attaching an outer cylinder of the load absorbing tie rod to an aircraft structure (step 204). A compressed gas contained in the outer cylinder is configured to allow translation of the piston toward a first end surface of the outer cylinder in response to a load greater than a first load threshold and prevent translation of the piston toward the first end surface of the piston in response to loads less than the first load threshold.

In various embodiments, method 200 may further include injecting the compressed gas through a valve fluidly coupled to the outer cylinder. A volume of the compressed fluid may be selected such that a pressure within a volume of outer cylinder is between about 7.9 MPa and about 49.3 MPa (between 1145.8 psi and 7150.4 psi), between about 8.9 MPa and about 39.5 MPa (between 1290.8 psi and 5729.0 psi), between about 9.9 MPa and about 39.5 (between 1435.9 psi and 5729.0 psi), between about 9.9 MPa and about 29.6MPa (between 1435.9 psi and 4293.1 psi), between about 9.9 MPa and about 19.7 MPa (between 1435.9 psi and 2857.2 psi), between about 9.9 MPa and about 13.8 MPa (between 1435.9 psi and 2001.5 psi), and/or about 9.9 MPa (1435.9 psi). In the previous context only, the term "about" means ±0.5 MPa (± 72.5 psi).

Method 200 further includes locating a stopper between a piston head of the piston and a second end surface of the outer cylinder In various embodiments, the interior cabin monument comprises at least one of a galley structure, a lavatory structure, or an overhead bin. In various embodiments, method 200 may further include coupling a monument connector to the piston and the interior cabin monument and coupling an aircraft connector to the outer cylinder the aircraft structure.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A load absorbing tie rod, comprising:

    an outer cylinder (126);
    a piston (128) located at least partially within the outer cylinder (126);
    a compressed gas (152) located in a volume (150) defined by a piston head (140) of the piston (128) and the outer cylinder (126), wherein the compressed gas is configured to allow translation of the piston (128) toward a first end surface (148) of the outer cylinder (126) in response to a load greater than a first load threshold being applied to the piston (128) and to prevent translation of the piston (128) toward the first end surface (148) in response to loads less than the first load threshold being applied to the piston, wherein the piston (128) includes the piston head (140) and a piston shaft (142) extending from the piston head (140), wherein a first surface (146) of the piston head (140) is oriented toward the first end surface (148) of the outer cylinder (126) and wherein the first surface (146) of the piston head (140), the first end surface (148) of the outer cylinder (126), and an internal surface (144) of the outer cylinder (126) define the volume; and
    a stopper (170) located between a second surface (162) of the piston head (140) and a second end surface (164) of the outer cylinder (126), wherein the stopper (170) is integral to the outer cylinder (126) such that the internal surface (144) of the outer cylinder (126) has a first diameter in a first portion of the outer cylinder (126) and a second, smaller diameter in a second portion of the outer cylinder (126), the second diameter being configured to generate an interference with the second surface (162) of the piston head (140) and thereby preventing or reducing translation of piston head (140) toward the second end surface (164).

2. The load absorbing tie rod of claim 1, wherein the first load threshold is greater than or equal to 5.0 kilonewtons.

3. The load absorbing tie rod of claim 2, wherein a pressure within the volume is between about 9.9 megapascals and about 19.7 megapascals.

4. The load absorbing tie rod of claim 3, further comprising a pressure release valve fluidly connected to the volume, the pressure release valve being configured to open in response to a second load threshold, the second load threshold being greater than or equal to 25.0 kilonewtons.

5. An assembly, comprising

   an interior cabin monument;
   an aircraft structure; and
   a load absorbing tie rod of any preceding claim coupled to the interior cabin monument and the aircraft structure,
   wherein the outer cylinder (126) is coupled to the aircraft structure, and
   wherein the piston is coupled to the interior cabin monument.

6. The assembly of claim 5, further comprising:

   a monument connector coupled to the piston (128) and a bracket of the interior cabin monument; and
   an aircraft connector coupled to the outer cylinder (126) and the aircraft structure.

7. The assembly of claim 6, wherein the monument connector is coupled to the piston (128) via a threaded engagement, or wherein the monument connector is integrally formed with the piston.

8. The assembly of claim 6 or 7, wherein the load absorbing tie rod includes a pressure release valve fluidly coupled to the volume.

9. A method, comprising:

   attaching a piston (128) of a load absorbing tie rod to an interior cabin monument;
   attaching an outer cylinder (126) of the load absorbing tie rod to an aircraft structure, wherein a compressed gas contained in the outer cylinder (126) is configured to allow translation of the piston (128) toward a first end surface of the outer cylinder (126) in response to a load greater than or equal to a first load threshold being applied to the piston (128) and to prevent translation of the piston (128) toward the first end surface in response to loads less than the first load threshold, wherein the piston (128) includes a piston head (140) and a piston shaft (142) extending from the piston head (140), wherein a first surface (146) of the piston head (140) is oriented toward a first end surface (148) of the outer cylinder (126), and wherein the first surface (146) of the piston head (140), the first end surface (148) of the outer cylinder (126), and an internal surface (144) of the outer cylinder (126) define the volume; and
   locating a stopper (170) between a second surface (162) of the piston head (140) and a second end surface (164) of the outer cylinder (126), wherein the stopper (170) is integral to the outer cylinder (126) such that the internal surface (144) of the outer cylinder (126) has a first diameter in a first portion of the outer cylinder (126) and a second, smaller diameter in a second portion of the outer cylinder (126), the second diameter being configured to generate an interference with the second surface (162) of the piston head (140) and thereby preventing or reducing translation of piston head (140) toward the second end surface (164).

10. The method of claim 9, further comprising injecting the compressed gas through a valve fluidly coupled to the outer cylinder (126), wherein the valve is configured to open in response to the load applied to the piston (128) being greater than a second load threshold.

11. The method of claim 9, wherein the first load threshold is between about 4.0 kilonewtons and about 7.0 kilonewtons, and wherein the second load threshold is greater than or equal to 25.0 kilonewtons.

12. The method of claim 11, further comprising:

   coupling a monument connector to the piston (128) and the interior cabin monument; and
   coupling an aircraft connector to the outer cylinder (126) the aircraft structure, wherein the interior cabin monument comprises at least one of a galley structure, a lavatory structure, or an overhead bin.

**Patentansprüche**

1. Lastaufnehmende Zugstange, umfassend:

    einen äußeren Zylinder (126);
    einen Kolben (128), der wenigstens teilweise innerhalb des äußeren Zylinders (126) angeordnet ist;
    ein komprimiertes Gas (152), das in einem Volumen (150) angeordnet ist, das durch einen Kolbenkopf (140) des Kolbens (128) und den äußeren Zylinder (126) definiert ist, wobei das komprimierte Gas konfiguriert ist, um Translation des Kolbens (128) zu einer ersten Endoberfläche (148) des äußeren Zylinders (126) hin als Reaktion darauf zu ermöglichen, dass eine Last größer als ein erster Lastschwellenwert auf den Kolben (128) aufgebracht wird, und Translation des Kolbens (128) zu der ersten Endoberfläche (148) hin als Reaktion darauf zu verhindern, dass Lasten kleiner als der erste Lastschwellenwert auf den Kolben aufgebracht werden, wobei der Kolben (128) den Kolbenkopf (140) und einen Kolbenschaft (142) beinhaltet, der sich von dem Kolbenkopf (140) erstreckt, wobei eine erste Oberfläche (146) des Kolbenkopfes (140) zu der ersten Endoberfläche (148) des äußeren Zylinders (126) hin orientiert ist und wobei die erste Oberfläche (146) des Kolbenkopfes (140), die erste Endoberfläche (148) des äußeren Zylinders (126) und eine innere Oberfläche (144) des äußeren Zylinders (126) das Volumen definieren; und
    einen Stopper (170), der zwischen einer zweiten Oberfläche (162) des Kolbenkopfes (140) und einer zweiten Endoberfläche (164) des äußeren Zylinders (126) angeordnet ist, wobei der Stopper (170) integral mit dem äußeren Zylinder (126) ausgebildet ist, sodass die innere Oberfläche (144) des äußeren Zylinders (126) einen ersten Durchmesser in einem ersten Abschnitt des äußeren Zylinders (126) und einen zweiten, kleineren Durchmesser in einem zweiten Abschnitt des äußeren Zylinders (126) aufweist, wobei der zweite Durchmesser konfiguriert ist, um eine Interferenz mit der zweiten Oberfläche (162) des Kolbenkopfes (140) zu erzeugen und dadurch Translation des Kolbenkopfes (140) zu der zweiten Endoberfläche (164) hin zu verhindern oder zu reduzieren.

2. Lastaufnehmende Zugstange nach Anspruch 1, wobei der erste Lastschwellenwert größer als oder gleich 5,0 Kilonewton ist.

3. Lastaufnehmende Zugstange nach Anspruch 2, wobei ein Druck innerhalb des Volumens zwischen etwa 9,9 Megapascal und etwa 19,7 Megapascal liegt.

4. Lastaufnehmende Zugstange nach Anspruch 3, ferner umfassend ein Druckablassventil, das fluidisch mit dem Volumen verbunden ist, wobei das Druckablassventil konfiguriert ist, um als Reaktion auf einen zweiten Lastschwellenwert zu öffnen, wobei der zweite Lastschwellenwert größer als oder gleich 25,0 Kilonewton ist.

5. Baugruppe, umfassend

    ein Innenkabinenmonument;
    eine Luftfahrzeugstruktur; und
    eine lastaufnehmende Zugstange nach einem der vorhergehenden Ansprüche, die mit dem Innenkabinenmonument und der Luftfahrzeugstruktur gekoppelt ist,
    wobei der äußere Zylinder (126) mit der Luftfahrzeugstruktur gekoppelt ist, und
    wobei der Kolben mit dem Innenkabinenmonument gekoppelt ist.

6. Baugruppe nach Anspruch 5, ferner umfassend:

    einen Monumentverbinder, der mit dem Kolben (128) und einer Halterung des Innenkabinenmonuments gekoppelt ist; und
    einen Luftfahrzeugverbinder, der mit dem äußeren Zylinder (126) und der Luftfahrzeugstruktur gekoppelt ist.

7. Baugruppe nach Anspruch 6, wobei der Monumentverbinder über einen Gewindeeingriff mit dem Kolben (128) gekoppelt ist oder wobei der Monumentverbinder integral mit dem Kolben ausgebildet ist.

8. Baugruppe nach Anspruch 6 oder 7, wobei die lastaufnehmende Zugstange ein Druckablassventil beinhaltet, das fluidisch mit dem Volumen gekoppelt ist.

9. Verfahren, umfassend:

    Anbringen eines Kolbens (128) einer lastaufnehmenden Zugstange an einem Innenkabinenmonument;
    Anbringen eines äußeren Zylinders (126) der lastaufnehmenden Zugstange an einer Luftfahrzeugstruktur, wobei ein komprimiertes Gas, das in dem äußeren Zylinder (126) enthalten ist, konfiguriert ist, um Translation des Kolbens (128) zu einer ersten Endoberfläche des äußeren Zylinders (126) hin als Reaktion darauf zu ermöglichen, dass eine Last größer als oder gleich einem ersten Lastschwellenwert auf den Kolben (128) aufgebracht wird, und Translation des Kolbens (128) zu der ersten Endoberfläche hin als Reaktion auf Lasten kleiner als der erste Lastschwellenwert zu verhindern, wobei der Kolben (128) einen Kolbenkopf (140) und einen Kolbenschaft (142) beinhaltet, der sich von dem Kolbenkopf (140) erstreckt, wobei eine erste Oberfläche (146) des Kolbenkopfes (140) zu einer ersten Endoberfläche (148) des äußeren Zylinders (126) hin orientiert ist und wobei die erste Oberfläche (146) des Kolbenkopfes (140), die erste Endoberfläche (148) des äußeren Zylinders (126) und eine innere Oberfläche (144) des äußeren Zylinders (126) das Volumen definieren; und

Anordnen eines Stoppers (170) zwischen einer zweiten Oberfläche (162) des Kolbenkopfes (140) und einer zweiten Endoberfläche (164) des äußeren Zylinders (126), wobei der Stopper (170) integral mit dem äußeren Zylinder (126) ausgebildet ist, sodass die innere Oberfläche (144) des äußeren Zylinders (126) einen ersten Durchmesser in einem ersten Abschnitt des äußeren Zylinders (126) und einen zweiten, kleineren Durchmesser in einem zweiten Abschnitt des äußeren Zylinders (126) aufweist, wobei der zweite Durchmesser konfiguriert ist, um eine Interferenz mit der zweiten Oberfläche (162) des Kolbenkopfes (140) zu erzeugen und dadurch Translation des Kolbenkopfes (140) zu der zweiten Endoberfläche (164) hin zu verhindern oder zu reduzieren.

10. Verfahren nach Anspruch 9, ferner umfassend Injizieren des komprimierten Gases durch ein Ventil, das fluidisch mit dem äußeren Zylinder (126) gekoppelt ist, wobei das Ventil konfiguriert ist, um als Reaktion darauf zu öffnen, dass die auf den Kolben (128) aufgebrachte Last größer als ein zweiter Lastschwellenwert ist.

11. Verfahren nach Anspruch 9, wobei der erste Lastschwellenwert zwischen etwa 4,0 Kilonewton und etwa 7,0 Kilonewton liegt und wobei der zweite Lastschwellenwert größer als oder gleich 25,0 Kilonewton ist.

12. Verfahren nach Anspruch 11, ferner umfassend:

Koppeln eines Monumentverbinders mit dem Kolben (128) und dem Innenkabinenmonument; und
Koppeln eines Luftfahrzeugverbinders mit dem äußeren Zylinder (126) und der Luftfahrzeugstruktur, wobei das Innenkabinenmonument wenigstens eines von einer Bordküchenstruktur, einer Toilettenstruktur oder einem Gepäckfach umfasst.

## Revendications

1. Barre de raccordement absorbant la charge, comprenant :

un cylindre externe (126) ;
un piston (128) situé au moins partiellement à l'intérieur du cylindre externe (126) ;
un gaz comprimé (152) contenu dans un volume (150) défini par une tête de piston (140) du piston (128) et le cylindre externe (126), dans laquelle le gaz comprimé est configuré pour permettre le déplacement du piston (128) vers une première surface d'extrémité (148) du cylindre externe (126) en réponse à une charge supérieure à un premier seuil de charge qui est appliquée au piston (128), et pour empêcher le déplacement du piston (128) vers la première surface d'extrémité (148) en réponse à des charges inférieures au premier seuil de charge qui sont appliquées au piston, dans laquelle le piston (128) comporte la tête de piston (140) et une tige de piston (142) s'étendant à partir de la tête de piston (140), dans laquelle une première surface (146) de la tête de piston (140) est orientée vers la première surface d'extrémité (148) du cylindre externe (126) et dans laquelle la première surface (146) de la tête de piston (140), la première surface d'extrémité (148) du cylindre externe (126) et une surface interne (144) du cylindre externe (126) définissent le volume ; et
une butée (170) située entre une seconde surface (162) de la tête de piston (140) et une seconde surface d'extrémité (164) du cylindre externe (126), dans laquelle la butée (170) est solidaire du cylindre externe (126) de sorte que la surface interne (144) du cylindre externe (126) présente un premier diamètre dans une première partie du cylindre externe (126) et un second diamètre plus petit dans une seconde partie du cylindre externe (126), le second diamètre étant configuré pour générer une interférence avec la seconde surface (162) de la tête de piston (140), et empêchant ou réduisant ainsi le déplacement de la tête de piston (140) vers la seconde surface d'extrémité (164).

2. Barre de raccordement absorbant la charge selon la revendication 1, dans laquelle le premier seuil de charge est supérieur ou égal à 5,0 kilonewtons.

3. Barre de raccordement absorbant la charge selon la revendication 2, dans laquelle une pression à l'intérieur du volume est comprise entre environ 9,9 mégapascals et environ 19,7 mégapascals.

**4.** Barre de raccordement absorbant la charge de la revendication 3, comprenant en outre une soupape de décharge de pression reliée fluidiquement au volume, la soupape de décharge de pression étant configurée pour s'ouvrir en réponse à un second seuil de charge, le second seuil de charge étant supérieur ou égal à 25,0 kilonewtons.

**5.** Ensemble, comprenant

un aménagement de cabine interne ;
une structure d'aéronef ; et
une barre de raccordement absorbant la charge selon l'une quelconque revendication précédente accouplée à l'aménagement de cabine interne et à la structure d'aéronef,
dans lequel le cylindre externe (126) est accouplé à la structure d'aéronef, et
dans lequel le piston est accouplé à l'aménagement de cabine interne.

**6.** Ensemble selon la revendication 5, comprenant en outre :

un connecteur d'aménagement accouplé au piston (128) et à un support de l'aménagement de cabine interne ; et
un connecteur d'aéronef accouplé au cylindre externe (126) et à la structure d'aéronef.

**7.** Ensemble selon la revendication 6, dans lequel le connecteur d'aménagement est accouplé au piston (128) par l'intermédiaire d'une prise filetée, ou dans lequel le connecteur d'aménagement est formé intégralement avec le piston.

**8.** Ensemble selon la revendication 6 ou 7, dans lequel la barre de raccordement absorbant la charge comporte une soupape de décharge de pression accouplée fluidiquement au volume.

**9.** Procédé, comprenant :

la fixation d'un piston (128) d'une barre de raccordement absorbant la charge à un aménagement de cabine interne ;
la fixation d'un cylindre externe (126) de la barre de raccordement absorbant la charge à une structure d'aéronef, dans lequel un gaz comprimé contenu dans le cylindre externe (126) est configuré pour permettre le déplacement du piston (128) vers une première surface d'extrémité du cylindre externe (126) en réponse à une charge supérieure ou égale à un premier seuil de charge qui est appliquée au piston (128), et pour empêcher le déplacement du piston (128) vers la première surface d'extrémité en réponse à des charges inférieures au premier seuil de charge, dans lequel le piston (128) comporte une tête de piston (140) et une tige de piston (142) s'étendant à partir de la tête de piston (140), dans lequel une première surface (146) de la tête de piston (140) est orientée vers une première surface d'extrémité (148) du cylindre externe (126) et dans lequel la première surface (146) de la tête de piston (140), la première surface d'extrémité (148) du cylindre externe (126) et une surface interne (144) du cylindre externe (126) définissent le volume ; et le positionnement d'une butée (170) entre une seconde surface (162) de la tête de piston (140) et une seconde surface d'extrémité (164) du cylindre externe (126), dans lequel la butée (170) est solidaire du cylindre externe (126) de sorte que la surface interne (144) du cylindre externe (126) présente un premier diamètre dans une première partie du cylindre externe (126) et un second diamètre plus petit dans une seconde partie du cylindre externe (126), le second diamètre étant configuré pour générer une interférence avec la seconde surface (162) de la tête de piston (140), et empêchant ou réduisant ainsi le déplacement de la tête de piston (140) vers la seconde surface d'extrémité (164).

**10.** Procédé selon la revendication 9, comprenant en outre l'injection du gaz comprimé à travers une soupape accouplée fluidiquement au cylindre externe (126), dans lequel la soupape est configurée pour s'ouvrir en réponse à la charge appliquée au piston (128) qui est supérieure à un second seuil de charge.

**11.** Procédé selon la revendication 9, dans lequel le premier seuil de charge est compris entre environ 4,0 kilonewtons et environ 7,0 kilonewtons, et dans lequel le second seuil de charge est supérieur ou égal à 25,0 kilonewtons.

**12.** Procédé selon la revendication 11, comprenant en outre :

l'accouplement d'un connecteur d'aménagement au piston (128) et à l'aménagement de cabine interne ; et
l'accouplement d'un connecteur d'aéronef au cylindre externe (126) de la structure d'aéronef, dans lequel l'aménagement de cabine interne comprend au moins l'une parmi une structure d'office, une structure de bloc toilettes ou un compartiment de rangement supérieur.

FIG.1

FIG.2

FIG.3A

FIG.3B

200

ATTACH PISTON OF LOAD
ABSORBING TIE ROD TO INTERIOR
CABIN MONUMENT
202

ATTACH OUTER CYLINDER OF
LOAD ABSORBING TIE ROD TO
AIRCRAFT STRUCTURE
204

# FIG.4

**REFERENCES CITED IN THE DESCRIPTION**

**Patent documents cited in the description**

- IN 202241017961
- EP 3020636 B1
- US 5862895 A
- US 10371313 B2
- US 2018283485 A2